# EUROPÄISCHE PATENTSCHRIFT

(11) **EP 0 893 330 B1**
(45) Veröffentlichungstag und Bekanntmachung des Hinweises auf die Patenterteilung: **10.04.2002**
(21) Anmeldenummer: 98111941.5
(22) Anmeldetag: 27.06.1998
(51) Int. Cl.: B62D 25/16

(54) **Kotflügel zur Abdeckung eines Fahrzeugrads**
Mudguard for covering of a vehicle wheel
Garde-boue pour la couverture d'une roue d'un véhicule

(30) Priorität: 22.07.1997 DE 29713006 U
(43) Veröffentlichungstag der Anmeldung: 27.01.1999
(73) Patentinhaber: Sauermann, Franz, 86558 Freinhausen (DE)
(72) Erfinder: Sauermann, Franz, 86558 Freinhausen (DE)
(74) Vertreter: Sasse, Volker, Dipl.-Ing.

(56) Entgegenhaltungen:
- EP-A- 0 138 233
- EP-A- 0 434 540
- DE-A- 3 443 279
- DE-A- 3 925 773

## Beschreibung

Die Erfindung betrifft einen dreiteiligen Kotflügel zur Abdeckung eines Fahrzeugrads gemäß dem Oberbegriff des Patentanspruchs 1.

Aus der DE 34 43 279 A1 ist ein Kotflügel für Straßenfahrzeuge bekannt, der von zwei äußeren Elementen und einem Zwischenelement gebildet ist. An den beiden äußeren Elementen sind zur Festlegung am Fahrzeugrahmen Befestigungselemente einstückig angeformt. Das Zwischenelement ist über hinterschnittene Rastverbindungen mit den äußeren Elementen verbunden. Diese Rastverbindung hat jedoch zur Folge, daß das Zwischenelement nicht ohne Zerstörung entfernt werden kann. Bei einem Defekt eines Elements muß demnach der gesamte Kotflügel ausgewechselt werden. Außerdem bilden die drei Elemente des Kotflügels eine starre Einheit, so daß er sich gegenüber Stößen wie ein einteiliger Kotflügel verhält.

Aus der DE 39 25 773 A ist ein gattungsgemäßer Kotflügel, insbesondere für Lastwagen bekannt, der von einem Mittelteil und zwei Endteilen gebildet ist. An den Endteilen ist jeweils ein Ras haken angeformt, der das Ende des Mittelteils hintergreift. Dieser Rasthaken wirkt mit einem elastischen Sicherungselement des Endteils zusammen, das den Rasthaken gegen das freie Ende des Mittelteils drückt.

Der Erfindung liegt die Aufgabe zugrunde, einen Kotflügel der eingangs genannten Art zu schaffen, der vor Beschädigungen durch das Fahrzeugrad bzw. durch die aufliegende Last besser geschützt ist.

Diese Aufgabe wird erfindungsgemäß mit den Merkmalen des Patentanspruchs 1 gelöst.

Durch die gegenseitig übergreifende Ausbildung der Kotflügelteile wird zusammen mit der Festlegung des Mittelteils an den Endteilen mit Spannmitteln eine gewisse Nachgiebigkeit des Mittelteils gegenüber äußeren Kräften erzielt. Insbesondere beim Beladen eines Nutzfahrzeugs oder beim Durchfahren von Schlaglöchern in der Fahrbahn kann es vorkommen, daß das Fahrzeugrad oder die Ladefläche kurzzeitig gegen das Mittelteil des Kotflügels stoßen. Die elastische Festlegung des Mittelteils an den Endteilen ermöglicht dem Mittelteil, diesem Stoß durch Verschiebung gegenüber den Endteilen bei gleichzeitiger Dehnung der Spannmittel nachzugeben. Dadurch wird eine Zerstörung des Kotflügels zuverlässig verhindert, selbst wenn dieser aus Kunststoff gefertigt ist. Die gegenseitig übergreifende Festlegung des Mittelteils an den Endteilen ergibt für das Mittelteil eine ausreichende Führungswirkung, so daß sichergestellt ist, daß nach dem Stoß gegen das Mittelteil dieses wieder in die ordnungsgemäße Lage an den Endteilen zurückkehrt. Vorzugsweise ist der Verbindungsbereich zwischen dem Mittelteil und den Endteilen ohne Hinterschneidung geformt, um eine gegenseitige Verschiebung zwischen beiden Teilen beim Auftreten von Stößen nicht zu behindern. Der zum Mittelteil gerichtete Fortsatz der Endteile wird dabei vom Mittelteil übergriffen, das hierzu eine korrespondierend geformte Aussparung aufweist. Der Fortsatz bildet daher eine Führungsfläche, was die Führungswirkung des Mittelteils an den Endteilen weiter verbessert. Vorzugsweise verläuft der Fortsatz nahezu über die gesamte Breite des Kotflügels, so daß zusammen mit der übergreifenden Ausbildung zwischen Mittelteil und Fortsatz auch bei teilweise angehobenem Mittelteil eine ausreichende Dichtwirkung im Verbindungsbereich gegeben ist. Ein Anheben des Mittelteils während der Fahrt, was beispielsweise durch ein Schlagloch in der Fahrbahn hervorgerufen werden könnte, führt daher nicht zu einem Wasseraustritt im Verbindungsbereich. Der Kotflügel kann daher auch unter diesen Umständen die geforderte Wasserableitwirkung erfüllen, wobei der Verbindungsbereich festigungstechnisch günstig ausgebildet ist.

Eine besonders günstige Ausbildung des Verbindungsbereichs zwischen dem Mittelteil und den Endteilen als Steckverbindung ergibt sich aus Anspruch 2. Eine Steckverbindung verbessert die Führungswirkung des Mittelteils an den Endteilen, so daß die Nachgiebigkeit des Mittelteils gegenüber Stößen verbessert ist. Die parallele Ausrichtung der Steckverbindungen zueinander erleichtert das Verschieben des Mittelteils in axialer Richtung zur Steckverbindung, wobei sich die Bewegungen an beiden Enden des Mittelteils nicht gegenseitig behindern. Vorzugsweise sind die Steckverbindungen vertikal ausgerichtet, so daß das Mittelteil einfach von oben aufgesteckt werden kann. Dies ergibt einen kurzen, vertikalen Verschiebeweg des Mittelteils beim Auftreten von Stößen und erleichtert zusätzlich die Montage des Mittelteils an den Endteilen von oben. Alternativ können die Steckverbindungen auch tangential zum Kotflügel ausgerichtet sein, so daß sich ein besonders kompakter Aufbau des Kotflügels ergibt. Die Steckverbindungen sind in diesem Fall zueinander im Winkel ausgerichtet, so daß sich ein besonders fester Halt des Mittelteils an den beiden Endteilen ergibt.

Eine einstückige Erstellung des Fortsatzes zusammen mit dem Endteil bzw. dem Mittelteil gemäß Anspruch 3 ist fertigungstechnisch vorteilhaft, da dabei der Aufwand für die Montage des Fortsatzes an den Endteilen entfällt. Da der Fortsatz keinerlei Hinterschneidungen aufweist, ergeben sich durch die einstückige Fertigung auch keinerlei Probleme. Insbesondere muß dabei für den Radraum kein Gießkern erstellt werden.

Eine Ausbildung des Fortsatzes als U-Profil oder Hohlkörper gemäß Anspruch 4, sorgt für eine günstige Elastizität des Fortsatzes. Auf diese Weise kann der gewünschte Formschluß zwischen den Endteilen und dem Mittelteil sichergestellt werden, wobei trotzdem beide Teile leicht gegeneinander verschiebbar sind. Zur Erfüllung dieser Bedingung müssen keine engen Toleranzen eingehalten werden, da sich der Fortsatz aufgrund seiner Elastizität an die Ausnehmung des Mittelteils entsprechend anpassen kann.

Eine vorteilhafte Weiterbildung der Endteile ergibt sich aus Anspruch 5. Eine im wesentlichen vertikal ausgerichtete Außenwand erlaubt ein einfaches Anbringen von Fahrzeugteilen, wie Beleuchtungseinrichtungen oder ein Nummernschild bzw. von Fahrzeugzubehörteilen, wie beispielsweise Keile zum Sichern des Fahrzeuges. Die im wesentlichen vertikal ausgerichtete Wand ermöglicht zusätzlich eine einfache Montage eines Antispraygeflechts an der Innenseite des hinteren Endteils.

Besonders geringe Herstellungskosten ergeben sich, wenn der Kotflügel gemäß Anspruch 6 aus Kunststoff, vorzugsweise Polyethylen, Polyuretan, Polypropylen oder einem synthetischen Kautschuk erstellt ist. Insbesondere lassen sich in diesem Fall die einzelnen Kotflügelteile jeweils einstückig in einem Gießvorgang erstellen, ohne daß hierdurch die Herstellung dieser Teile aufwendig wird. Zusätzlich bietet die Fertigung des Kotflügels aus Kunststoff den Vorteil, daß der Kotflügel korrosionsbeständig ist. Die angegebenen Kunststoffe besitzen eine günstige Elastizität, so daß der Kotflügel besser vor Beschädigungen durch Steinschlag geschützt ist.

Ist das Spannmittel gemäß Anspruch 7 annähernd in Steckrichtung des Mittelteils gespannt, so wird dessen Spannkraft optimal zum Zurückziehen des Mittelteils des Kotflügels nach einem Stoß ausgenutzt. Das Spannmittel kann daher verhältnismäßig schwach dimensioniert sein, wobei trotzdem ein sicheres Halten des Mittelteils an den Endteilen gewährleistet ist.

Die Ausbildung des Spannmittels als Gummi- oder Silikonkautschukband gemäß Anspruch 8 ist besonders platzsparend und somit auch unter beengten Platzverhältnissen verwendbar. Zusätzlich ergibt sich der Vorteil, daß das Spannmittel in diesem Fall korrosionsbeständig und praktisch ermüdungsfrei ist.

Alternativ könnte das Spannmittel gemäß Anspruch 9 auch von einem Totpunktverschluß gebildet sein, der eine einfache Montage gewährleistet. In diesem Fall übergreift das Spannmittel die Verbindungsstelle zwischen zwei Kotflügelteilen. Das freie Ende des Spannmittels hintergreift eine Hinterschneidung eines Kotflügelteils und zieht in festgelegter Lage beide Teile gegeneinander. Durch den Totpunktverschluß läßt sich der Kotflügel mit geringem Kraftaufwand montieren, was insbesondere beim Auswechseln beschädigter Teile wichtig ist.

Zur Festlegung des Spannmittels am Mittelteil hat sich die Ausführung gemäß Anspruch 10 bewährt. Dabei hintergreift das Spannmittel mit einem Ende eine hinterschnittene Nut oder einen Schlitz des Mittelteils. Diese Nut bzw. der Schlitz können in das Mittelteil unmittelbar eingeformt werden, so daß hierdurch keine zusätzlichen Bearbeitungskosten entstehen. Alternativ könnte die Nut bzw. der Schlitz auch nachträglich eingefräst werden, was insbesondere bei der Verwendung von Kunststoff relativ einfach durchgeführt werden kann. Das Ende des Spannmittels hintergreift die Nut bzw. den Schlitz wie ein Anker. Die vorgeschlagene Art der Festlegung des Spannmittels ist einfach zu realisieren und gleichzeitig besonders sicher. Insbesondere läßt sich auf diese Weise das Spannmittel sehr einfach montieren, so daß insgesamt geringe Herstellungskosten entstehen.

Gemäß Anspruch 11 ist es vorteilhaft, das Endteil an einem Tragrohr festzulegen, das den Endteil durchdringt. Das Tragrohr wird in diesem Fall vom Kotflügelendteil geschützt und gleichzeitig verdeckt, was einen vorteilhaften optischen Eindruck bewirkt. Der Kotflügelendteil kann am Tragrohr einfach mittels Schellen festgelegt werden, die in das Endteil eingelagert sind.

Schließlich ist es gemäß Anspruch 12 günstig, am Endteil mindestens einen Rohrstutzen vorzusehen, der vom Tragrohr durchdrungen ist. Vorzugsweise wird der Rohrstutzen an den Kotflügel einstückig angeformt, um eine feste Verbindung zwischen dem Rohrstutzen und dem Endteil zu erzielen. Der Rohrstutzen bietet für das Tragrohr eine Führung und erleichtert damit das Aufstecken des Endteils auf das Tragrohr. Außerdem liegt der Rohrstutzen flächig auf dem Tragrohr auf, so daß eine zuverlässige und gleichzeitig stabile Halterung des Endteils am Tragrohr gewährleistet ist.

Eine bevorzugte Ausführungsform des Erfindungsgegenstandes wird beispielhaft anhand der Zeichnung beschrieben, ohne den Schutzumfang zu beschränken.

Es zeigt:
- Figur 1: eine Seitenansicht eies dreiteiligen Kotflügels,
- Figur 2: eine Ansicht des Kotflügels gemäß Figur 1 von der Fahrzeugrückseite,
- Figur 3: eine Schnittdarstellung durch den Verbindungsbereich zweier Kotflügelteile gemäß Figur 1.
- Figur 4: eine Schnittdarstellung einer weiteren Ausführungsform eines Kotflügels.
- Figur 5: eine Ansicht des Kotflügels gemäß Figur 4 von vorne und
- Figur 6: eine Schnittdarstellung durch den Verbindungsbereich zweier Kotflügelteile gemäß Figur 4.

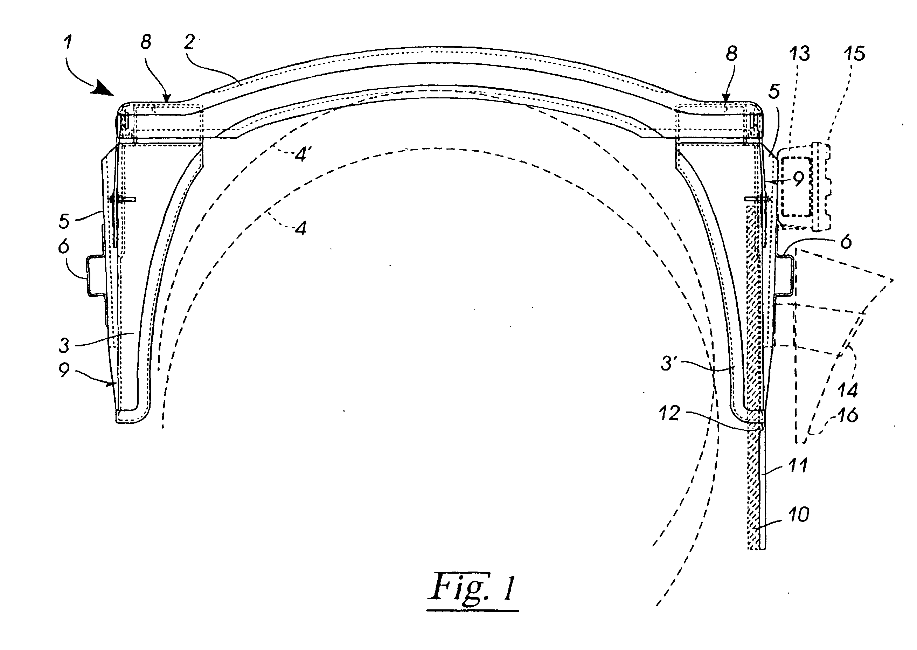

Ein Kotflügel 1 gemäß Figur 1 besteht aus einem Mittelteil 2 und einem vorderen 3 und hinteren Endteil 3'. Das Mittelteil 2 deckt dabei einen oberen Bereich eines strichliert angedeuteten Fahrzeugsrades 4 ab, während die beiden Endteile 3, 3' einen vorderen bzw. hinteren Radbereich abdecken. Das Fahrzeugrad 4 hat eine gewisse Bewegungsfreiheit in vertikaler Richtung, was durch einen versetzt dargestellten Radumriß 4' angedeutet ist. Unterschiedliche Radpositionen ergeben sich insbesondere durch unterschiedliche Ladezustände des Fahrzeugs, aber auch während der Fahrt als Folge von Straßenunebe nheiten, wie beispielsweise Schlaglöchern.

In beiden Endteilen 3, 3' des Kotflügels 1 sind Befestigungsschienen 5 eingeformt, an denen Halteprofile 6 befestigt sind. Diese Halteprofile 6 sind am Fahrzeugrahmen festgeschweißt. Auf diese Weise sind die beiden Endteile 3 des Kotflügels 1 fest mit dem Rahmen des Fahrzeugs verbunden, wobei durch die vertikal verlaufenden Befestigungsschienen 5 die beiden Endteile 3, 3' in vertikaler Richtung relativ zum Fahrzeug verschiebbar sind. Auf diese Weise kann der Kotflügel 1 an die jeweiligen, vom Fahrzeugtyp abhängigen Gegebenheiten angepaßt werden, so daß der Kotflügel 1 korrekt zum Fahrzeugrad 4 ausgerichtet ist. Das Mittelteil 2 des Kotflügels 1 ist über später näher beschriebene Steckverbindungen 8 mit den beiden Endteilen 3 verbunden.

Die beiden Endteile 3, 3' weisen im wesentlichen vertikal ausgerichtete Außenflächen 9 auf, die die Befestigungsschienen 5 tragen. Die Außenwand 9 des hinteren Endteils 3' ist innenseitig mit einem Antispraygeflecht 10 belegt, das vom Fahrzeugrad 4 abspritzendes Wasser auffängt und nach unten ableitet. Dieses Antispraygeflecht 10 erstreckt sich bis über einen Schmutzfänger 11, der einstückig am hinteren Endteil 3' angeformt ist. Zur Erzielung einer Flexibilität des Schmutzfängers 11 ist die Wandstärke des Endteils 3' im Übergangsbereich zwischen der Außenwand 9 und dem Schmutzfänger 11 in ihrer Dicke durch eine querlaufende Nut 12 geschwächt. An der Wand 9 des hinteren Endteils 3' sind außenseitig Befestigungsmittel 13, 14 vorgesehen, die zum einen eine Fahrzeugbeleuchtung 15 und zum anderen einen Keil 16 halten. Diese Befestigungsmittel 13, 14 sind einstückig am hinteren Endteil 3' angeformt. Alternativ könnten diese Befestigungsmittel 13, 14 auch als gesonderte Teile gefertigt und nachträglich an der Befestigungsschiene 5 des hinteren Endteils 3' montiert werden.

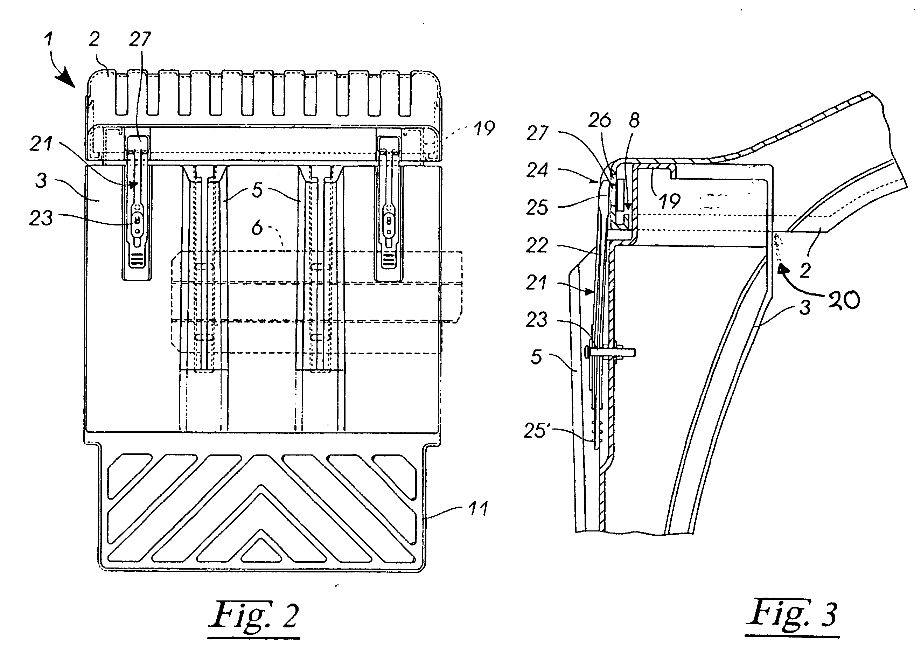

Die beiden Steckverbindungen 8 sind zueinander spiegelsymmetrisch ausgebildet. Sie werden daher anhand des Verbindungsbereichs mit dem vorderen Endteil 3 gemäß der Schnittdarstellung der Figur 3 in Verbindung mit Figur 2 beschrieben.

Die Steckverbindung 8 ist von einem nach oben gerichteten stegartigen Fortsatz 19 des Endteils 3 gebildet, der mit einer unterseitigen Ausnehmung 20 des Mittelteils 2 korrespondiert. Der Fortsatz 19 ist vertikal und ohne Hinterschneidung ausgerichtet, so daß das Mittelteil 2 vom Endteil 3 in vertikaler Richtung nach oben abhebbar ist. Um ein vollständiges Abheben des Mittelteils 2 während der Fahrt zu verhindern, ist es über Spannmittel 21 am Endteil 3 gesichert. Das Spannmittel 21 besteht aus einem Gummiband 22, dessen Ende als Greiflasche 25' ausgebildet ist und das am Endteil 3 über einen Befestigungszapfen 23 festgelegt ist. Das Gegenende 24 des Spannmittels 21 weist ein Greifteil 25 auf, das einen das Mittelteil 2 durchsetzenden Schlitz 26 hintergreift. Das Gegenende 24 des Gummibandes 22 ist hierzu blockartig ausgebildet und weist in vertikaler Richtung verlaufende Führungsnuten 27 auf, die in den Schlitz 26 eintauchen.

Im folgenden wird die Montage des Kotflügels 1 an einem Fahrzeug beschrieben. Falls die Befestigungsmittel 13, 14 zur Aufnahme der Beleuchtung 15 bzw. von Keilen 16 nicht bereits einstückig mit dem hinteren Endteil 3 gefertigt sind, werden diese zunächst am Endteil 3 festgelegt. Noch im Werk werden die Gummibänder 22 von innen nach außen durch die Schlitze 26 des Mittelteils 2 gezogen und mit ihrer Führungsnut 27 in den Schlitzen 26 festgelegt. Die weitere Montage erfolgt direkt am Fahrzeug. Zunächst werden die Halteprofile 6 über entsprechende Befestigungsmittel wie beispielsweise Schrauben an die Befestigungsschienen 5 der Endteile 3 angebracht, wobei die Halteprofile 6 entlang der Befestigungsschienen 5 verschiebbar sind. Zur vertikalen Ausrichtung der Endteile 3, 3' des Kotflügels 1 werden diese relativ zum Fahrzeugrad 4 verschoben, wobei sich das Halteprofil 6 entlang der Befestigungsschiene 5 der Endteile 3, 3' verschiebt. Nach Erreichen der gewünschten Lage der Endteile 3, 3' wird das Halteprofil 6 an der Befestigungsschiene 5 arretiert. Nach diesen Vorarbeiten wird nun das Mittelteil 2 des Kotflügels 1 über die Steckverbindungen 8 von oben auf die beiden Endteile 3, 3' aufgeschoben. Hierbei dient der Fortsatz 19 der Endteile 3, 3' als Führung für die Ausnehmungen 20 des Mittelteils 2, was ein präzises Aufschieben des Mittelteils 2 auf die Endteile 3, 3' gewährleistet. Abschließend werden die am Mittelteil 2 gehaltenen Gummibänder 22 an der Greiflasche 25' erfassend nach unten gedehnt und mittels der Befestigungszapfen 23 an den Endteilen 3, 3' festgelegt. Beim Loslassen des Gummibandes 22 zieht es sich zusammen, wobei es das Mittelteil 2 elastisch nachgiebig arretiert.

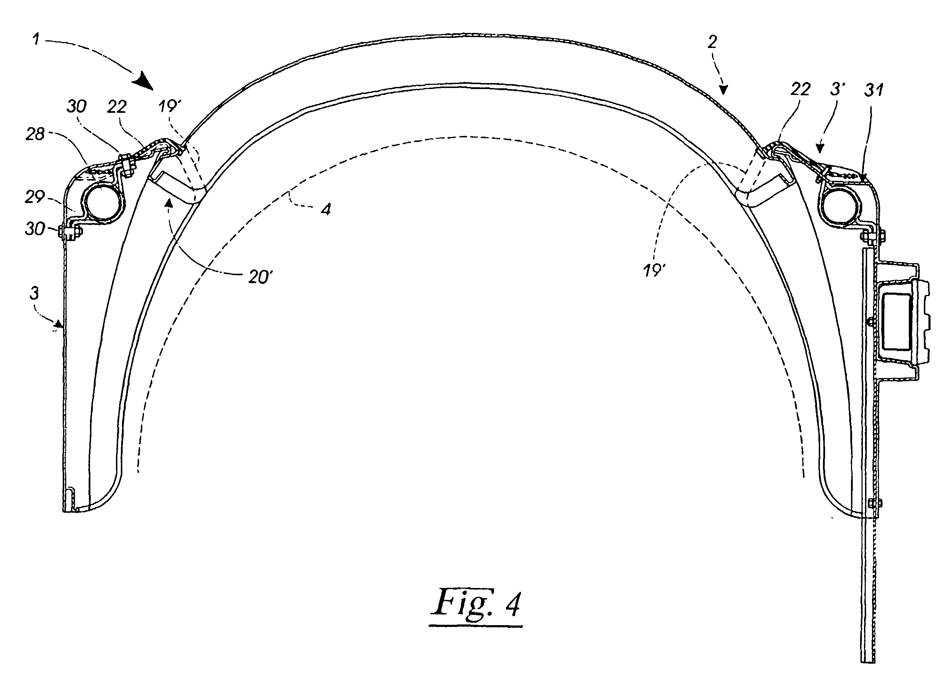

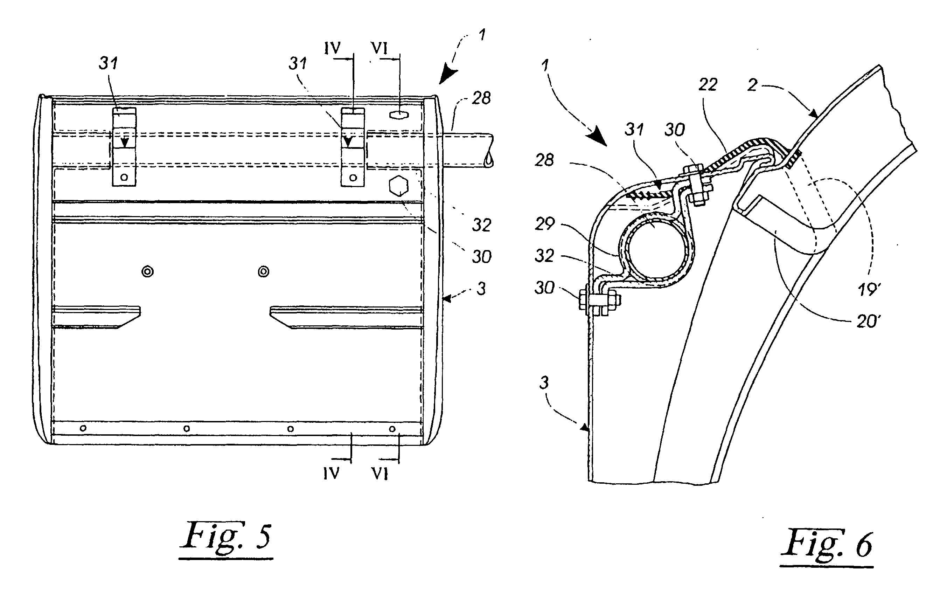

Figur 4 zeigt eine alternative Ausführungsform eines dreiteiligen Kotflügels 1. Die Endteile 3, 3' dieses Kotflügels 1 werden von Tragrohren 28 durchdrungen und sind mittels Schellen 29 an den Tragrohren 28 festgelegt. Zur platzsparenden Halterung der Schellen 29 sind diese innerhalb des Endteils 3 vorgesehen und mittels von außen zugänglichen Schrauben 30 festgelegt. Dies erleichtert die Montage des Kotflügels 1 über dem Rad 4. Zur besseren Darstellung ist das vordere Endteil 3 entlang der Schelle 29 (Schnittlinie VI-VI gemäß Figur 5) und das hintere Endteil 3' entlang des Gummibandes 22 (Schnittlinie IV-IV gemäß Figur 5) geschnitten. Um eine günstige Zugrichtung des Gummibandes 22 zu erzielen, ist es in einer Vertiefung 31 des Endteils 3, 3' vorgesehen.

Jedes Endteil 3, 3' weist eine Ausnehmung 20' auf, die mit einem Fortsatz 19' des Mittelteils 2 korrespondiert. Der Fortsatz 19' ist dabei tangential zum Kotflügel 1 und somit in etwa tangential zum Fahrzeugrad 4 ausgerichtet. Die Gummibänder 22 sind in etwa in Steckrichtung der Steckverbindung 19', 20' vorgespannt. Im übrigen entspricht dieser Kotflügel 1 der Ausführungsform gemäß Figur 1.

Aus der Vorderansicht des Kotflügels 1 gemäß Figur 5 ist die Lage der Vertiefungen 31 zu erkennen. Das Tragrohr 28 durchdringt den Kotflügel 1 und tritt lediglich einseitig aus diesem heraus. Um eine feste Verbindung zwischen dem Tragrohr 28 und dem Endteil 32 zu erzielen, ist am Endteil ein nach innen ragender Rohrstutzen 32 angeformt, dessen Innenkontur an das Tragrohr 28 angepaßt ist. Dies gewährleistet eine flächige Auflage des Endteils 3 am Tragrohr 28.

Die Figur 6 zeigt eine Schnittdarstellung entlang der Schnittlinie VI-VI des Verbindungsbereichs zwischen dem Endteil 3 und dem Mittelteil 2. Die Schrauben 30 zur Festlegung der Schelle 29 sind von außen zugänglich, wobei die Schelle 29 konzentrisch zum Rohrstutzen 32 angeordnet ist. Damit kann das Endteil 3 bei gelockerten Schrauben 30 auf das Tragrohr 28 gesteckt werden, wobei das Endteil 3 ausreichend vom Rohrstutzen 32 geführt ist. Es besteht daher keine Gefahr, daß das Tragrohr 28 an den Schellen 29 anstößt. Demnach muß im Innenraum des Kotflügels 1 in keiner Weise hantiert werden. Nach dem Aufstecken der beiden Endteile 3, 3' auf die Tragrohre 28 werden die Schellen 29 durch Anziehen der Schrauben 30 fixiert. Die weitere Montage des Kotflügels 1 entspricht der Montage der ersten Ausführungsform gemäß Figur 1.

### Bezugszeichenliste

- 1: Kotflügel
- 2: Mittelteil
- 3: vorderes Endteil
- 3': hinteres Endteil
- 4,4': Fahrzeugrad
- 5: Befestigungsschiene
- 6: Halteprofil
- 7: Haltestange
- 8: Steckverbindung
- 9: Außenwand
- 10: Antispraygeflecht
- 11: Schmutzfänger
- 12: Nut
- 13, 14: Befestigungsmittel
- 15: Fahrzeugbeleuchtung
- 16: Teil
- 19, 19': Fortsatz
- 20, 20': Ausnehmung
- 21: Spannmittel
- 22: Gummiband
- 23: Befestigungszapfen
- 24: Gegenende des Spann mittels
- 25: Greifteil
- 25': Greiflasche
- 26: Schlitz
- 27: Führungsnut
- 28: Tragrohr
- 29: Schelle
- 30: Schraube
- 31: Vertiefung
- 32: Rohrstutzen

## Patentansprüche

1. Kotflügel (1) zur Abdeckung eines Fahrzeugrads (4), wobei der Kotflügel (1) von einem den oberen Radbereich abdeckenden Mittelteil (2) und von zwei jeweils am Fahrzeug festlegbaren, den vorderen und hinteren Radbereich abdeckenden Endteilen (3, 3') gebildet ist, die das Mittelteil (2) formschlüssig halten, wobei das Mittelteil (2) und die Endteile (3, 3') gegenseitig übergreifend geformt und von Spannmitteln (21) gegeneinander auf Spannung gehalten sind **dadurch gekennzeichnet, daß** die Endteile (3, 3') im Verbindungsbereich einen zum Mittelteil (2) gerichteten Fortsatz (19) oder eine Ausnehmung (20') aufweisen, der/die mit jeweils einer Ausnehmung (20) oder einem zum Endteil (3, 3') gerichteten Fortsatz (19') des Mittelteils (2) korrespondiert.

2. Kotflügel nach Anspruch 1, **dadurch gekennzeichnet, daß** das Mittelteil (2) und die Endteile (3, 3') in den Verbindungsbereichen derart geformt sind, daß sie parallel ausgerichtete Steckverbindungen (8) zum vorzugsweise vertikalen oder tangential zum Kotflügel gerichteten Aufstecken des Mittelteils (2) auf die Endteile (3, 3') bilden.

3. Kotflügel nach Anspruch 1 oder 2, **dadurch gekennzeichnet, daß** der Fortsatz (19, 19') einstückig mit dem Endteil (3, 3') oder dem Mittelteil (2) erstellt ist.

4. Kotflügel nach mindestens einem der Ansprüche 1 bis 3, **dadurch gekennzeichnet, daß** der Fortsatz (19, 19') als U-Profil oder Hohlkörper ausgebildet ist.

5. Kotflügel nach mindestens einem der Ansprüche 1 bis 4, **dadurch gekennzeichnet, daß** wenigstens eines der Endteile (3, 3') eine im wesentlichen vertikal ausgerichtete Außenwand (9) aufweist, an der vorzugsweise Befestigungsmittel (13, 14) zur Aufnahme von Fahrzeugteilen (15) und/oder Zubehör (16) vorgesehen sind.

6. Kotflügel nach mindestens einem der Ansprüche 1 bis 5, **dadurch gekennzeichnet, daß** die Endteile (3, 3') und/oder das Mittelteil (2) aus Kunststoff, vorzugsweise Polyethylen, Polyurethan, Po ypropylen, EPDM- oder einem Ethylen-Propylen-Terpolymer-Kautschuk erstellt sind.

7. Kotflügel nach Anspruch 1, **dadurch gekennzeichnet, daß** das Spannmittel (21) annähernd in Steckrichtung des Mittelteils (2) gespannt ist.

8. Kotflügel nach Anspruch 1 oder 7, **dadurch gekennzeichnet, daß** das Spannmittel (21) ein Gummi- (22) oder Silikonkautschukband aufweist.

9. Kotflügel nach Anspruch 1 oder 7, **dadurch gekennzeichnet, daß** das Spannmittel (21) einen Totpunktverschluß aufweist.

10. Kotflügel nach mindestens einem der Ansprüche 1 und 7 bis 9, **dadurch gekennzeichnet, daß** das Spannmittel (21) mit einem Ende (24) eine hinterschnittene Nut oder einen durchsetzenden Schlitz (26) des Mittelteils (2) hintergreift.

11. Kotflügel nach mindestens einem der Ansprüche 1 bis 10, **dadurch gekennzeichnet, daß** das Endteil (3, 3') von einem am Fahrzeug festgelegten Tragrohr (28) durchdrungen und daran mittels Schellen (29) festgelegt ist.

12. Kotflügel nach Anspruch 11, **dadurch gekennzeichnet, daß** das Endteil (3, 3') mindestens einen an das Tragrohr (28) angepaßten Rohrstutzen (32) aufweist, der vom Tragrohr (28) durchdrungen ist.

## Claims

1. Mudguard (1) for covering a vehicle wheel (4), the mudguard (1) being formed by a central part (2) covering the upper wheel region and by two end parts (3, 3') which can each be secured on the vehicle, cover the front and rear wheel regions and hold the central part (2) in a form-fitting manner, the central part (2) and the end parts (3, 3') being shaped such that they mutually overlap and being held tensioned with respect to one another by tensioning means (21), **characterized in that** the end parts (3, 3') have, in the connecting region, an extension (19) directed towards the central part (2) or a recess (20'), which extension/recess corresponds in each case with a recess (20) or an extension (19'), directed towards the end part (3, 3'), of the central part (2).

2. Mudguard according to Claim 1, **characterized in that** the central part (2) and the end parts (3, 3') are shaped in the connecting regions in such a manner that they form plug-in connections (8), which are aligned in parallel, with the plugging of the central part (2) onto the end parts (3, 3') preferably vertically or directed tangentially to the mudguard.

3. Mudguard according to Claim 1 or 2, **characterized in that** the extension (19, 19') is produced integrally with the end part (3, 3') or the central part (2).

4. Mudguard according to at least one of Claims 1 to 3, **characterized in that** the extension (19, 19') is designed as U-profile or hollow body.

5. Mudguard according to at least one of Claims 1 to 4, **characterized in that** at least one of the end parts (3, 3') has an outer wall (9) which is orientated essentially vertically and on which fastening means (13, 14) for receiving vehicle parts (15) and/or accessories (16) are preferably provided.

6. Mudguard according to at least one of Claims 1 to 5, **characterized in that** the end parts (3, 3') and/or the central part (2) are produced from plastic, preferably polyethylene, polyurethane, polypropylene, EPDM rubber or an ethylene-propylene-terpolymer rubber.

7. Mudguard according to Claim 1, **characterized in that** the tensioning means (21) is tensioned approximately in the plug-in direction of the central part (2).

8. Mudguard according to Claim 1 or 7, **characterized in that** the tensioning means (21) has a rubber tape (22) or a tape made of silicone rubber.

9. Mudguard according to Claim 1 or 7, **characterized in that** the tensioning means (21) has a dead-centre fastening.

10. Mudguard according to at least one of Claims 1 and 7 to 9, **characterized in that** the tensioning means (21) engages with one end (24) behind an undercut groove or a slot (26) fastened to the central part (2).

11. Mudguard according to at least one of Claims 1 to 10, **characterized in that** the end part (3, 3') is passed through by a supporting pipe (28), which is secured on the vehicle, and is secured on said supporting pipe by means of clips (29).

12. Mudguard according to Claim 11, **characterized in that** the end part (3, 3') has at least one flanged socket (32) which is matched to the supporting pipe (28) and is passed through by the supporting pipe (28).

## Revendications

1. Garde-boue (1) pour la couverture d'une roue (4) d'un véhicule, le garde-boue (1) étant formé par une partie centrale (2) recouvrant la zone supérieure de la roue, et par deux parties extrêmes (3, 3') pouvant être respectivement fixées sur le véhicule, recouvrant la zone avant et arrière de la roue, qui maintiennent la partie centrale (2) par coopération de forme, la partie centrale (2) et les parties extrêmes (3, 3') étant conformées en recouvrement mutuel et étant maintenues mutuellement en tension par des moyens de serrage (21), **caractérisé en ce que** les parties extrêmes (3, 3') présentent dans la zone d'assemblage un prolongement (19) dirigé vers la partie centrale (2) ou un creux (20'), qui correspond respectivement à un creux (20) ou à un prolongement (19') de la partie centrale (2) dirigé vers la partie extrême (3, 3').

2. Garde-boue suivant la revendication 1, **caractérisé en ce que** la partie centrale (2) et les parties extrêmes (3, 3') sont conformées dans les zones d'assemblage de sorte qu'elles forment des assemblages à emboîtement (8) orientés parallèlement pour l'emmanchement, de préférence vertical ou dirigé tangentiellement par rapport au garde-boue, de la partie centrale (2) sur les parties extrêmes (3, 3').

3. Garde-boue suivant l'une des revendications 1 et 2, **caractérisé en ce que** le prolongement (19, 19') est fabriqué d'une seule pièce avec la partie extrême (3, 3') ou avec la partie centrale (2).

4. Garde-boue suivant l'une au moins des revendications 1 à 3, **caractérisé en ce que** le prolongement (19, 19') est réalisé sous forme de profilé en U ou de corps creux.

5. Garde-boue suivant l'une au moins des revendications 1 à 4, **caractérisé en ce qu'**au moins l'une des parties extrêmes (3, 3') présente une paroi externe (9) dirigée essentiellement verticalement, sur laquelle sont de préférence prévus des moyens de fixation (13, 14) pour recevoir des pièces (15) du véhicule et/ou des accessoires (16).

6. Garde-boue suivant l'une au moins des revendications 1 à 5, **caractérisé en ce que** les parties extrêmes (3, 3') et/ou la partie centrale (2) sont fabriquées en matière plastique, de préférence polyéthylène, polyuréthanne, polypropylène, caoutchouc EPDM ou caoutchouc d'éthylène-propylène-terpolymère.

7. Garde-boue suivant la revendication 1, **caractérisé en ce que** le moyen de serrage (21) est serré approximativement dans le sens d'emboîtement de la partie centrale (2).

8. Garde-boue suivant l'une des revendications 1 et 7, **caractérisé en ce que** le moyen de serrage (21) présente une bande de caoutchouc (22) ou de caoutchouc silicone.

9. Garde-boue suivant l'une des revendications 1 et 7, **caractérisé en ce que** le moyen de serrage (21) présente une fermeture en arc-boutement.

10. Garde-boue suivant l'une au moins des revendications 1 et 7 à 9, **caractérisé en ce que** le moyen de serrage (21) enserre par une extrémité (24) une rainure en contre-dépouille ou une fente de traversée (26) de la partie centrale (2).

11. Garde-boue suivant l'une au moins des revendications 1 à 10, **caractérisé en ce que** la partie extrême (3, 3') est pénétrée par un tube support (28) fixé sur le véhicule, sur lequel elle est fixée au moyen de colliers (29).

12. Garde-boue suivant la revendication 11, **caractérisé en ce que** la partie extrême (3, 3') présente au moins une tubulure (32) adaptée au tube support (28) et pénétrée par le tube support (28).
